# EUROPÄISCHE PATENTSCHRIFT

(11) **EP 2 307 709 B1**
(45) Veröffentlichungstag und Bekanntmachung des Hinweises auf die Patenterteilung: **30.08.2017**
(21) Anmeldenummer: 09786083.7
(22) Anmeldetag: 29.07.2009
(51) Int. Cl.: F03B 17/06

(54) **STRÖMUNGSMASCHINE MIT SCHAUFELRÄDERN**
TURBO-MACHINE WITH BLADE WHEELS
TURBOMACHINE AVEC ROUES À AUBES

(30) Priorität: 30.07.2008 IT BZ20080030
(43) Veröffentlichungstag der Anmeldung: 13.04.2011
(73) Patentinhaber: Pasetto, Piergiorgio, 39100 Bolzano (IT)
(72) Erfinder: Pasetto, Piergiorgio, 39100 Bolzano (IT)
(74) Vertreter: Ausserer, Anton
(86) Internationale Anmeldenummer: PCT/IB2009/006402
(87) Internationale Veröffentlichungsnummer: WO 2010/013126

(56) Entgegenhaltungen:
- WO-A-85/01780
- WO-A-2004/074680
- DE-A1-102006 002 137
- US-A- 5 324 164

## Beschreibung

Die vorliegenden Erfindung bezieht sich auf eine Strömungsmaschine mit Schaufelrädern gemäß dem Oberbegriff des Patentanspruchs 1.

Derartige Maschinen sind bekannt, insbesondere aufgrund des italienischen Patents Nr. 1 345 097, angemeldet am 15. September 2003.

In diesem Patent wird ein Mechanismus beschrieben, in dem das Fluid senkrecht zur Achse eines Schaufelrades von Schaufeln abgefangen wird, die stetig mit einem geeigneten Einstelleingriff ausrichtbar sind. So kann die im Fluid enthaltene kinetische Energie, beispielsweise im Wasser, abgefangen und von den Schaufeln mit der vollen Fläche der Schaufeln selbst in einer zum Fluidstrom senkrechten Stellung aufgefangen werden und dadurch, dass keine Schaufeln in einer festen Stellung vorliegen, die Schaufeln in ihrer Drehung um die Rotorenachse, sobald sie kein Drehmoment oder nur ein negatives verwirklichen, den kleinsten Widerstand zum Fluidstrom besitzen. So können je nach Dichte und der physikalisch-chemischen Eigenschaften des Fluids sowie der Energie, die man erhalten will, die Schaufeln und der Rotor zweckmäßiger Weise bemessen werden.

Mit einem solchen Mechanismus hat der Anmelder selbst gefunden, dass ein derartiger Mechanismus unter verschiedenen Aspekten verbesserbar ist, um noch bessere Ergebnisse zu erzielen.

Die WO2004074680 die als nächstliegender Stand der Technik angesehen wird, beschreibt einen verbesserten Stromgenerator. Dieser umfasst eine Serie von vier Flügel die mit gleichem Anstand zur zentralen Achse angeordnet sind. Jeder der Flügel dreht sich um die eigene Achse und um eine zentrale Drehachse, um welche sich alle vier Flügel verbunden über Zahnräder drehen. Die Aufgabe der vorliegenden Erfindung liegt daher darin, eine Strömungsmaschine vorzuschlagen, bei der die kinetische Energie eines Fluids im höchsten Masse und mit einer höchsten Ausbeute genutzt werden kann.

Diese Aufgabe wird erfindungsgemäß durch eine Strömungsmaschine mit den Merkmalen der Patentansprüche gelöst. Gemäß der Erfindung ist eine Strömungsmaschine vorgesehen, die vergleichbar mit den langsam laufenden Reaktionsturbinen nach der Art "cross-flow", mit einer zur Strömungsrichtung eines Fluids senkrechten Achse ist, arbeitend mit zwei (oder mehreren) koaxialen und konzentrischen Laufrädern.

Die Strömungsmaschine ist konstruiert, um die kinetische Energie vom Fluidstrom (Wasser, Luft), in der sie wirkt, abzufangen. Jedes Laufrad besteht aus einem kreisförmigen Drehkörper und besitzt eine Anzahl von Schaufeln (zwei oder mehrere), die auf einem virtuellen Kreis angeordnet und normalerweise gleich beabstandet sind, dessen Durchmesser als Teilkreisdurchmesser angenommen werden kann. Auf jedem Laufrad sind die Schaufeln gleich und symmetrisch und jede ist um die eigene zur mittigen Achse der Maschine parallelen Drehachse mit einer Bewegung um 360° in allen beiden Richtungen drehbar.

Die Drehung der Schaufeln um ihre jeweilige Achse wird durch eine Geometrie von Mechanismen (unter den verschiedensten und durch eine Mechanismusgeometrie geordnet) festegelegt, welche die genaue Winkelposition einer jeden Schaufel gegenüber den anderen, dem sie tragenden Laufrad und der Stromrichtung des Fluids sicherstellen.

Die mechanischen Verbindungen der Bewegungen können in Abhängigkeit der Projektierungsbedürfnisse frei gewählt werden, es müssen bloß die Verhältnisse der Bewegungen zwischen Laufrädern und den Schaufeln eingehalten werden. Alles gemäß einer Ausrichtung derselben, ausgelegt für das beste Auffangen der kinetischen Energie des Fluids und in Abhängigkeit der von Moment zu Moment angenommenen Position in der Drehung des Laufrades. Die Bewegung ist harmonisch und ohne Schwankungen oder Schwingungen, da sie immer in der gleichen Richtung und mit Geschwindigkeiten ausgeführt wird, die zur Drehung des Laufrades proportional sind, auch wenn die Steuerung des Ruders oder von Hand aus nicht in die Regulierung eingreifen.

Die Drehung der Schaufeln ist ausgelegt, um eine Drehung von 180° um die eigenen Achse und in gegengesetztem Sinn zum gleichzeitigen Drehsinn des eigenen Laufrades auszuführen, das im demselben Zeitraum eine vollständige Umdrehung um die mittige Achse von 360° ausführt. Dies gilt gleichzeitig für die gesamten interessierten Schaufeln auf dem Teilkreis des Laufrades selbst und so weiter für jede Umdrehung.

Die beiden Laufräder untereinander laufen in Gegenrichtung voneinander um und so auch die Bewegungen der entsprechenden Schaufeln. Dies hilft die Torsionsresultierende aufzuheben, die dazu neigt, das Maschinenaggregat gegenüber der es tragenden Basis zur Drehung zu bringen, sowie die mechanischen Reibungen auszugleichen, die auf die Sensibilität des Ruders Einfluss nehmen würden. Dinge die bei Verwendung eines einzigen Laufrades geschehen würden.

Die Winkelgeschwindigkeit des Laufrades mit größerem Durchmesser ist normalerweise langsamer als jenes mit kleinerem Durchmesser, und ist zur Geschwindigkeit des durchfließenden Fluids proportional. Die Winkelgeschwindigkeit eines jeden einzelnen Laufrades kann (mechanisch) frei sein und nur durch die einzigen Aufprallspiele des Fluids auf den Schaufeln gesteuert sein oder mit einem genauen Verhältnis zwischen den Laufrädern gebunden und geordnet sein. Je nach Fall kann die mechanische Wahl einer freien Koppelung mit zwei Kraftausgängen, als Differenzial oder proportional gebunden getroffen werden.

Die Gegendrehung der beiden Laufräder wird durch den Schub des Fluids auf den Schaufeln erhalten, die je nach ihrer Neigungsposition, die schon bei der Montage vorgegeben ist, die kinetische Energie auffangen, indem sie in ein Drehmoment umgewandelt wird, und indem sie den sie überfahrenden Strom abgelenkt werden, mit verbessertem Synergieeffekt das Fluid auf die gleich nachfolgenden Schaufeln zwischen einem und einem anderen Laufrad leiten bis das System vollständig durchflossen wird. Wird jedenfalls gewünscht, können bei der Montage die Voraussetzungen für die Drehung in einer einzigen Richtung der Laufräder geschaffen werden.

Die Form der Schaufeln, auch wenn sie gegenüber der eigenen Achse symmetrisch sein müssen, muss nicht notwendigerweise ein klassisches aerohydrodynamisches Profil besitzen, da die Eintrittskante und die Austrittskante für den Wechsel dieser Rolle bei jeder Umdrehung des entsprechenden Laufrades gleich sein müssen. Dies bedeutet auch eine äußerste Veränderlichkeit der Ausgestaltung der Proportionen der Schaufeln und zwar: kurze und breite Schaufeln, lange und enge Schaufeln, und alle Zwischenmöglichkeiten, mit der Auflage, dass auf dem eigenen Laufrad die Schaufeln alle gleich und symmetrisch sind. Die Abmessungen der Maschine, der Laufräder, sowie der Abmessung, Form und Anzahl der Schaufeln, hängen von der vorgesehenen Leistung und von den physikalischen Eigenschaften des Fluids und von der Umgebung, der die Maschine ausgesetzt ist, ab. Die Werkstoffe der Maschine sind daher abhängig von der vorherigen Projektierung.

Die Maschine ist üblicherweise für eine Betriebsweise mit vertikaler Achse vorgesehen, sie kann jedoch auch in der Betriebsweise mit einer beliebigen Anordnung und Abwinkelung vorgesehen werden, mit der Auflage, dass die Achse zur Fluidrichtung senkrecht ist. Die Maschine selbst kann mit einem Ruder oder mit einer anderen Vorrichtung versehen sein, die die Fluidrichtung fühlt und auf die Eingangssteuerung der Maschine wirkt, die eigens dafür vorgesehen ist, um die gleichzeitige Regulierung der Schaufeln der beiden Laufräder zu besorgen. Über ein Differential am Eingang kann auch eine manuelle Steuerung verbunden werden. Der Vorteil gegenüber anderen Strömungsmaschinen liegt darin, dass somit nur die Schaufeln auch mit einer Maschine im vollen Betrieb und der Kraftabgabe bequem ausgerichtet werden, ohne dass das ganze Aggregat ausgerichtet werden muss. Nicht nur dies, sondern es wird die Möglichkeit gegeben, einzugreifen, um die Laufräder mit demselben Wirkungsgrad, zu verlangsamen, zu bremsen, und eventuell in Gegenrichtung zu drehen, auch unter der vollen Last des Fluids und ohne irgend eine Bremse zu betätigen. Dieses System ist reversibel und daher auch als Antrieb gültig. Sollte anstelle der Energieabnahme am Ausgang, ein Motor oder ähnliches angewendet wird, wird in umgekehrter Art und Weise das Maschinensystem verwendet, um einen Schub dem Fluid zu geben, in dem es eingetaucht ist. Unter Einwirkung auf die Drehzahl wird die Kraft bestimmt und auf die Einstellung der Schaufeln kann der Schub gleichermaßen in einer beliebigen Richtung auf 360° gerichtet werden. Mit sicherem Vorteil der Manövrierfähigkeit vor allem im nautischem Gebiet, mit einem mittigen Schub von der Achse, kontinuierlich, und frei von auf schwimmende Schaufeln zurückzuführenden Schwingungen. Da überdies ein Laufrad verhältnismäßig langsam ist, läuft es schwierig die Gefahr einer Kavitation. Abmessungen und Proportionen, immer unter Beibehaltung desselben Betriebskonzeptes sind klarerweise Gegenstand einer sorgfältigen Projektierung je nach der Verwendung, für die in diesem Fall die Abtriebsmaschine bestimmt ist.

Weitere Merkmale und Varianten gehen aus den Patentansprüchen und aus der folgenden Beschreibung einiger in den beigefügten Zeichnungen dargestellten Ausführungsformen hervor. Es zeigen,

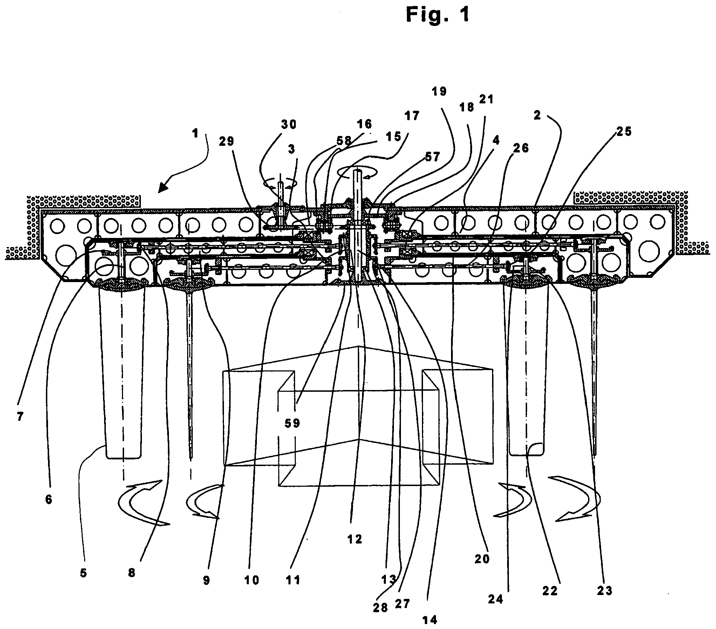

- Figur 1: einen schematischen Axialschnitt einer erfindungsgemäßen Strömungsmaschine, in einer ersten Ausführungsform, mit Laufrädern mit mechanisch gebundenen Bewegungen,
- Figur 2: einen schematischen Teilaxialschnitt, vergrößert aus Figur 1,
- Figur 3: einen schematischen Axialschnitt einer erfindungsgemäßen Strömungsmaschine in einer zweiten Ausführungsform mit Laufrädern mit vereinten Bewegungen am Ausgang mit einem Differenzial;
- Figur 4: einen vergrößerten Teilaxialschnitt aus Figur 3,
- Figur 5: einen schematischen Axialschnitt einer erfindungsgemäßen Strömungsmaschine in einer dritten Ausführungsform mit Laufrädern mit unabhängigen Kraftausgängen, und
- Figur 6: einen vergrößerten Teilaxialschnitt aus Figur 3.

In den Figuren ist mit der Bezugsziffer 1 insgesamt eine erfindungsgemäße Strömungsmaschine angegeben. Diese weist ein Basisgehäuse 2 auf, in dem im allgemeinen über ein Lager 3 ein erstes Laufrad 4 aufgenommen ist. Längs einer Kreislinie des Laufrades 4 sind mindestens zwei Schaufeln 5 über Wellen 6 drehbar gelagert und gleich beabstandet verteilt, deren Achsen zum Laufrad 4 senkrecht sind. Jede drehbare Welle 6 trägt fest die entsprechende Schaufel 5 und ist mit einem Kegelrad 7 versehen, das mit einem entsprechenden Kegelrad 8 kämmt, das auf einer Stange 9 drehfest gelagert ist, die senkrecht zur Achse der Welle 6 ist und vom Laufrad 4 drehbar getragen wird. Die Stange 9 trägt an ihrem anderen Ende drehfest ein Kegelrad 10, das mit einem Kegelrad 11 kämmt, das von einer Pinole 12 fest getragen wird, die von Lagern 13 auf einer vom Gehäuse 1 drehbar getragenen Welle 14 getragen werden. Das Laufrad 4 trägt überdies im Bereich seiner mittigen Bohrung einen kegelförmigen Zahnkranz 15, mit dem ein Ritzel 16 kämmt, das an einer vom Gehäuse 1 drehbar getragenen Welle 17 festliegt und eine zur Achse des Zahnkranzes 15 senkrechte Achse aufweist. Die Welle 17 trägt überdies ein zweites Ritzel 18, das mit einer stirnseitigen, kegelförmigen Zahnung einer auf der Welle 14 verkeilten Scheibe 19 kämmt.

Gemäß der Erfindung ist dem ersten Laufrad 4 ein zweites Laufrad 20 zugeordnet, das von einem Lager 21 des ersten Laufrades 4 drehbar getragen wird und gleich verteilt längs seines Kreisumfanges mindestens zwei Schaufeln 22 trägt, die von einer Welle 23 getragen werden, die vom Laufrad 20 mit zu derselben senkrechten Achse getragen wird. Wie das erste Laufrad 4 trägt auch in diesem Fall die Welle 23 ein an dieser festliegendes Kegelrad 24 und kämmt mit einem Kegelrad 25, das von einer Stange 26 vom Laufrad 20 mit einer zur Welle 23 senkrechten Achse drehbar gelagert wird und an seinem anderen Ende ein Kegelrad 27 trägt, das mit einem von der Pinole 12 festliegend getragenen Kegelrad 28 kämmt. Das Laufrad 20 ist überdies drehfest über einen Flansch 59 mit der Welle 14 verbunden.

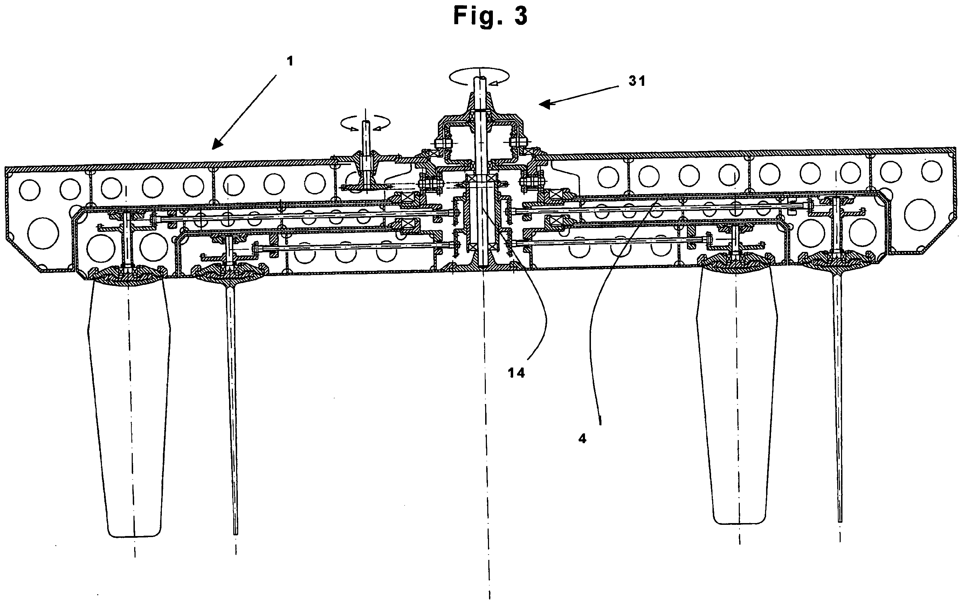

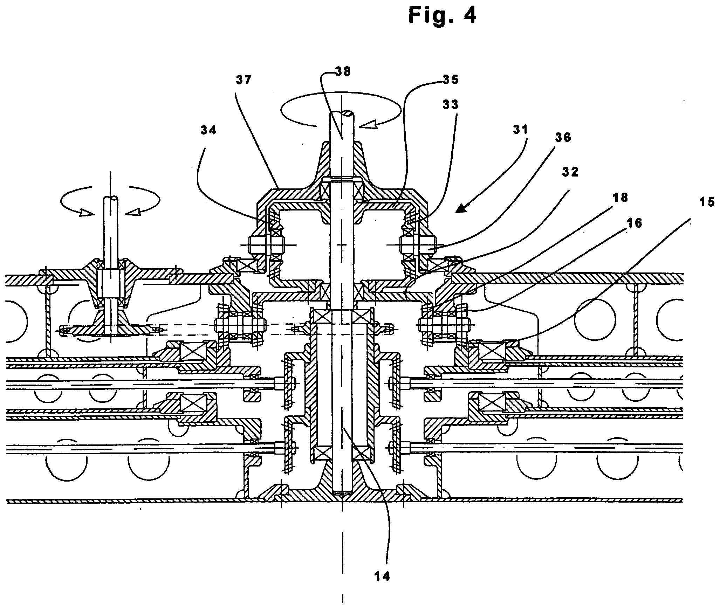

Die Pinole 12 trägt mit ihr festliegend ein Kettenrad 57, das über eine Kette 58 mit einem Kettenrad 29 verbunden ist, die an einer vom Gehäuse 1 drehbar gelagerten Welle 30 verkeilt ist. Damit ändert sich mit einer Drehung der Welle 30 die Stellung der Pinole 12 und daher die Winkelstellung der Schaufel 5 in einer beliebigen Stellung des Laufrades 4 bezüglich des Fluidstroms. In Figur 3 und 4 ist schließlich eine zweite Ausführungsform dargestellt, bei der die beiden Bewegungen des ersten und des zweiten Laufrades über ein Differenzial ausgeglichen werden, das in seiner Gesamtheit mit der Bezugsziffer 31 angegeben ist.

Das Differenzial 31 ist von einem Doppelzahnkranz 32 gebildet, der von der Welle 14 drehbar getragen ist und einerseits mit dem ersten Laufrad 4 über das Ritzel 16 und andererseits mit Planetenrädern 33 und 34 kämmt, die ihrerseits mit einem Zahnkranz 35 kämmen, die auf der Welle 14 verkeilt sind, mit der das zweite Laufrad 20 starr verbunden ist. Die Planetenräder 33 und 34 sind über Bolzen 36 von der Wand einer Glocke 37 drehbar getragen, die um die Welle 14 drehbar ist und starr eine Ausgangswelle 38 trägt. Es liegt nahe, dass die Ausgangswelle 38 als Abtrieb für Verbraucher dienen wird.

Somit wird über die Planetenträger 33, 34 die Bewegung des zweiten Laufrades 20 optimal mit der Bewegung ausgeglichen, die vom ersten Laufrad 4 übertragen wird.

### Weitere Merkmale sind die folgenden:

Somit hat man eine feste Basis 2, die die Gesamtheit der Maschine gliedert und die Laufräder in ihrem Betrieb stützt. Die Gesamtheit der Maschine kann an einem festen Aufbau oder beweglich je nach den Arbeitsbedingungen, angewandt sein.

Das erste Laufrad 4 bzw. das größere oder äußere, nimmt die Wellen-Schaufeln und die entsprechenden Bewegungsabläufe auf. Das zweite Laufrad 20 bzw. das kleinere oder innere, nimmt die Wellen-Schaufeln und die entsprechenden Bewegungsabläufe auf. Das Lager 3 bildet eine Verbindungsplatte zwischen der Basis und dem größeren oder äußeren Laufrad bei einer vertikalen Stellung der Laufräder.

Das Lager 21 bildet eine Verbindungsplatte zwischen dem größeren Laufrad und dem kleineren oder inneren Laufrad bei einer vertikalen Stellung der Laufräder.

Die Eingangswelle 30 der Regulierungen steht normalerweise still und wird direkt vom Ruder, einer ähnlichen Vorrichtung oder von Hand aus gesteuert. Die Verbindung zwischen der Welle 30 am Eingang der Regulierungen und der Pinole der Regulierungen kann anstatt von der Kette 58, von einem Zahnriemen, Zahnrädern, oder weitere erfolgen, nur muss das Übertragungsverhältnis festliegen und kein Schlupf vorhanden sein.

Die mittige Pinole 12 der Regulierungen ist normalerweise still liegend und kann nur aufgrund einer Betätigung der Welle 30 der Regulierungen drehen. Sie trägt festliegend die beiden Eingriffskränze 11 und 28 der Ritzel zur Verstellung der Schaufeln sowohl des äußeren Laufrades als auch des inneren Laufrades. Ihre Betätigung verursacht die gleichzeitige Bewegung aller ersten Ritzeln sowohl des größeren Laufrades als auch des kleineren Laufrades.

Das Rad zur Steuerung der Regulierungswelle ist drehfest mit der Pinole.

Die zweite Schaufel-Ritzel 8 (eines für jede Schaufel) des größeren Laufrades besitzt genau die halbe Anzahl von Zähnen des entsprechenden ersten Schaufel-Ritzel.

Das zweite Schaufel-Ritzel 25 (eines für jede Schaufel) des kleineren Schaufelrades besitzt genau die halbe Anzahl von Zähnen des entsprechenden ersten Schaufel-Ritzel.

Der Schaufelkranz liegt mit der Schaufelwelle des größeren Schaufelrades fest. Er wird durch den entsprechenden zweiten Schaufel-Ritzel betätigt und unterliegt daher seiner Mitnahme. Er besitzt eine Anzahl von Zähnen, die genau gleich ist, dem oberen Eingriffskranz des entsprechenden ersten Schaufel-Ritzels. Der an der Schaufelwelle des kleineren Laufrades festliegende Schaufelkranz 24 wird vom entsprechenden zweiten Schaufel-Ritzel bewegt und unterliegt daher seiner Mitnahme. Er besitzt eine Anzahl von Zähnen, die genau dem unteren Angriffskranz der entsprechenden ersten Schaufel-Ritzel ist.

Die Schaufelwelle des größeren Laufrades kann ein Anbindungssystem für die Schaufel besitzen, das anderer Art gemäß einer schon bekannten Mechanik sein kann.

Die Schaufelwelle des kleineren Laufrades kann ein Anbindungssystem für die Schaufel besitzen, das anderer Art gemäß einer schon bekannten Mechanik sein kann.

Die Schaufelart des größeren Laufrades ist links in einer Ebene (Bezugsnummer 5) und rechts hochkant dargestellt. Die Schaufelart des kleineren Laufrades ist links hochkant und rechts in einer Eben (Bezugsnummer 22) gezeigt.

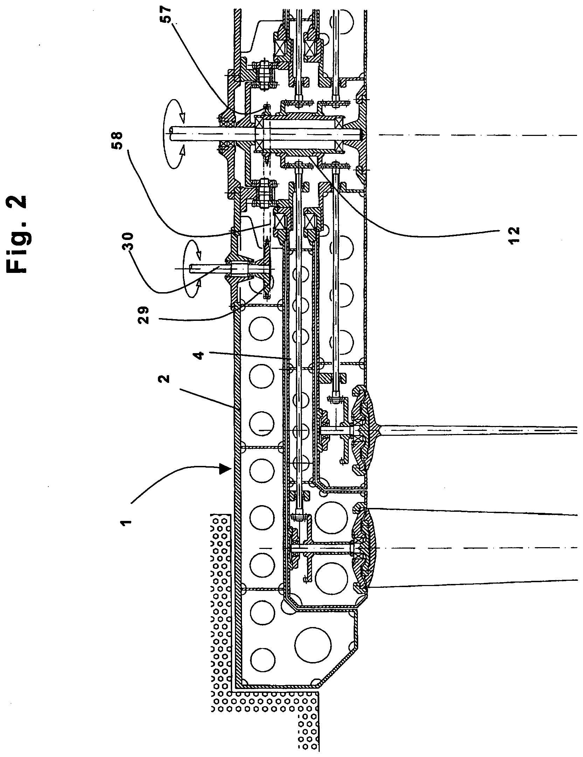

Ein mittiger Verbindungsflansch 59 (Figur 2) zwischen dem kleineren Laufrad und dem ersten Teil der mittigen Welle der Ausgangskraft überträgt das gesamte vom kleineren Laufrad erzeugte Moment.

Der erste Teil der mittigen Welle 14 überträgt praktisch etwa die Hälfte der von der Maschine erzeugten Leistung. Die beiden Planetenräder 16 und 18 sind darüber drehfest miteinander verbunden.

Der mittige Zahnkranz 19 verbindet starr und proportional die Bewegung zwischen dem größeren Laufrad und dem kleineren Laufrad unmittelbar auf den zweiten Teil der Kraftwelle, wobei das Drehmoment des größeren Laufrandes jenem des kleineren Laufrades hinzusummiert wird. Das Verhältnis der Zähne zwischen dem mittigen Kranz und dem mit dem größeren Laufrad festliegende Kranz ist den Bewegungen zwischen dem kleineren Laufrad und dem größeren Laufrad angepasst. Mit der Anordnung wie in Figur wird auch die Umkehrung vom größeren Laufrad kommenden und daher in der Richtung mit jener des kleineren Laufrades kohärenten Bewegung ausgeführt.

### VARIANTE MIT DIFFERENZIAL AM AUSGANG

Der Doppelzahnkranz weist einen Teil wie 19 auf, ist aber nicht mit der Kraftwelle verbunden, sondern mit einem weiteren Kranz, indem diesem das Moment des größeren Laufrades und die Richtung des kleineren übertragen wird.

Die kämmenden und vom ersten und zweiten Kranz kämmenden und mitgenommenen, in der Drehrichtung kohärenten Planetenräder nehmen ihrerseits das Differenzialgehäuse, und zwar die Glocke in der Drehung mit.

### VARIANTE MIT FREIEN BEWEGUNGEN

Es ist möglich den Doppelkranz über eine mit der Kraftachse koaxialen Pinole mit einem Außenverbraucher unmittelbar zu verbinden. So ist es auch möglich, die mittige Kraftwelle mit einem anderen Verbraucher zu verbinden.

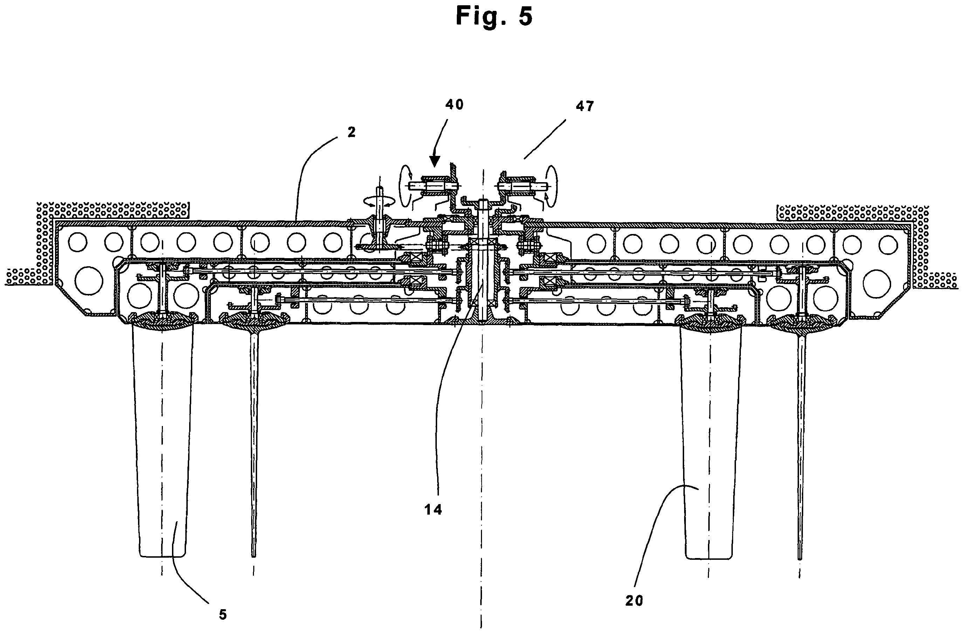

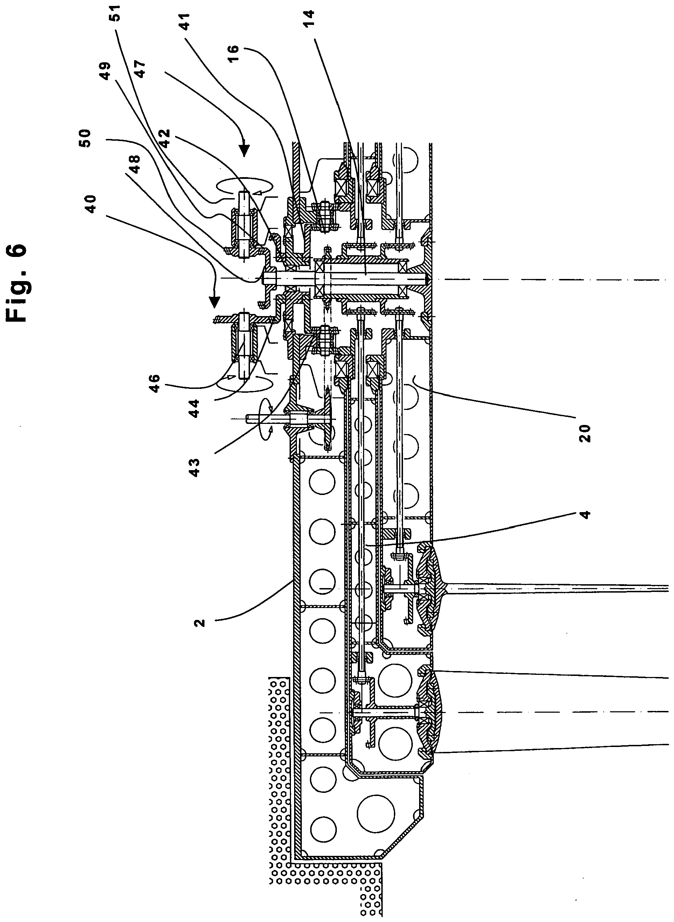

In einer, in Figur 5 und 6 dargestellten Ausführungsform, ist ein erster kinematischer Zug 40 durch eine Doppelglocke 41 gebildet, die von einem Lager 42 auf der Welle 14 getragen wird, das einerseits mit den Ritzeln 16 kämmende Stirnzähne 43 und andererseits mit einem auf einer in der festen Struktur 2 sich drehenden Welle 46 aufgekeilten Zahnrad 45 aufweist und dazu geeignet ist, als erster Kraftabgriff geeignet ist. Überdies ist ein zweiter kinematischer Zug 47 gebildet, von einer auf einer Welle 14 aufgekeilten Glocke 48 und mit ihren Stirnzähnen 49 mit einem auf einer im Basisgehäuse 2 drehbaren Welle 51 aufgekeilten Zahnrad 50 kämmend als zweiter Kraftabgriff geeignet. Somit ist für jedes Laufrad 4, 20 ein getrennter Ausgang für verschiedene Verbraucher vorgesehen.

## Patentansprüche

1. Strömungsmaschine mit Schaufelrädern, umfassend ein Gehäuse (2), ein vom Gehäuse (2) drehbar aufgenommenes Laufrad (4), mindestens zwei drehbar angeordnete, längs einer Kreislinie des Laufrades (4) gleichförmig verteilte Schaufeln, und die Schaufeln mit einer zur Achse des Laufrades parallelen Achse gelagert sind, Übertragungsmittel (7, 8, 9, 10) zwischen jeder Achse der Schaufel (5) und einer auf der Welle (14) des Schaufelrades drehbaren Pinole (12), **dadurch gekennzeichnet, dass** dem ersten Laufrad (4) ein zweites Laufrad (20) zugeordnet ist, das vom ersten Laufrad (4) drehbar aufgenommen ist, wobei das zweite Laufrad (20) mindestens zwei drehbar angeordnete Schaufeln (22) umfasst, die längs einer Kreislinie des Laufrades (20) gleichförmig verteilt und mit zum Laufrad parallelen Achse gelagert sind, Übertragungsmittel (24, 25, 26, 27, 28) zwischen jeder Achse der Schaufel (22) und der Pinole (12), die auf der Welle (14) des Laufrades (4,20) drehbar ist.

2. Strömungsmaschine nach Anspruch 1, **dadurch gekennzeichnet, dass** die Übertragungsmittel von einem auf der Achse einer jeden Schaufel festliegendem Kegelrad (24), von einem mit diesem letzteren kämmenden Kegelrad (25), von einer dieses letztere tragenden und drehbar vom Laufrad (20) gelagerten Stange (26), von einem von der Stange festliegend getragenen Kegelrad (27) und von einem von der Pinole (12) drehfest getragenen Kegelrad (28) gebildet ist.

3. Strömungsmaschine nach Anspruch 1, **dadurch gekennzeichnet, dass** die Pinole (12) um ihre eigene Achse drehbar einstellbar ist.

4. Strömungsmaschine nach Anspruch 1, **dadurch gekennzeichnet, dass** die Pinole (12) kinematisch mit einem Rad (29) verbunden ist, das vom Gehäuse drehbar aufgenommen und rudersteuerbar, von Hand aus, oder durch einen weiteren Betätigungseingriff einstellbar ist.

5. Strömungsmaschine nach Anspruch 1, **dadurch gekennzeichnet, dass** das erste Laufrad (4) einen Zahnkranz (15) aufweist, der mit einem ersten Ritzel (16) kämmt, das vom Gehäuse (11) mit einer zur Achse der Welle (14) senkrechten Achse drehbar getragen wird und mit einem zweiten Ritzel (17) verbunden ist, das seinerseits mit auf einer Welle (14) angeordnetem Kranz (19) kämmt.

6. Strömungsmaschine nach Anspruch 5, **dadurch gekennzeichnet, dass** das zweite Ritzel (20) auf derselben Welle wie das erste Laufrad (4) angeordnet ist.

7. Strömungsmaschine nach Anspruch 1, **dadurch gekennzeichnet, dass** das erste (4) und das zweite Laufrad (20) mit einer Ausgangswelle (38) über ein Differenzial (31) verbunden sind.

8. Strömungsmaschine nach Anspruch 1 und 6, **dadurch gekennzeichnet, dass** das Differenzial (31) durch einen Doppelzahnkranz (32) gebildet ist, der von der Welle (14) drehbar getragen wird und andererseits mit dem ersten Laufrad (4) und andererseits mit Planetenräder (33 und 34) kämmt, die mit einem Zahnkranz (35) kämmen, der auf der Welle (14) angeordnet ist, mit der das zweite Laufrad (20) starr verbunden ist, wobei die Planetenräder (33 und 34) durch eine Glocke (37) drehbar getragen werden, die um die Welle (14) herum drehbar ist und starr eine Ausgangswelle (38) trägt.

9. Strömungsmaschine nach Anspruch 1, deren entsprechenden Bewegungen der Laufräder auch voneinander getrennt benutzt werden.

10. Strömungsmaschine nach Anspruch 1, 6 und 7, **dadurch gekennzeichnet, dass** sie reversibel sein kann und daher verwendbar ist, um einen Schub im Fluid zu erzeugen, in dem sie wirkt.

11. Strömungsmaschine nach den vorstehenden Ansprüchen, **dadurch gekennzeichnet, dass** man in ihrer Gesamtheit mit Laufrädergehäusen arbeiten kann, die auch gegenüberliegen, wobei die Gesamtheit der koaxialen und konzentrischen Schaufeln beibehalten wird.

12. Strömungsmaschine nach den vorstehenden Ansprüchen, **dadurch gekennzeichnet, dass** sie in ihrer Gesamtheit auch eingekapselt oder mit geleitetem Fluss arbeiten kann.

## Claims

1. Fluid dynamic machine with blade rotors, comprising a body (2), a rotor (4) rotatably housed by the body (1), at least two blades (5) rotatably provided, uniformly distributed along a circumference of the rotor (4) and supported on a parallel axis to the axis of the rotor, transmission means (7, 8, 9, 10) between each axis of the blade (4) and a sleeve (12) rotatable on the shaft (14) of the rotor, **characterised in that** the first rotor (4) is associated with a second rotor (20) rotatably housed by the first rotor (4), the second rotor (20) comprising at least two blades (22) rotatably provided, uniformly distributed along a circumference of the rotor (20) and supported on a parallel axis to the axis of the rotor, transmission means (24, 25, 26, 27, 28) between each axis of the blade (22) and the sleeve (12) rotatable on the shaft (14) of the rotor.

2. Machine according to claim 1, **characterised in that** the transmission means is made up of a conical wheel (24), integral with the axis of each blade by a conical wheel (25)engaged with the latter by a rod holding the latter and rotatably supported by the rotor (20) by a conical wheel (27) integrally held by the rod and by a conical wheel (28) integrally held by the sleeve (12).

3. Machine according to claim 1, **characterised in that** the sleeve (12) is rotatably adjustable around its axis.

4. Machine according to claim 1, **characterised in that** the sleeve (12) is kinematically connected with a wheel (29) rotatably held by the body and adjustable using a rudder, manually or by another operating intervention.

5. Machine according to claim 1, **characterised in that** the first rotor (4) presents a crown gear (15) engaging with a first pinion gear (16) rotatably held by the body (1) on a perpendicular axis to the axis of the shaft (14) and with a second pinion gear (17) engaging in turn with a crown gear (19) force fitted onto the shaft (14).

6. Machine according to claim 1, **characterised in that** the second rotor (20) is force fitted onto the same shaft as the first rotor (4).

7. Machine according to claim 1, **characterised in that** the first (4) and the second rotor (20) are kinematically connected with an output shaft (38) through a differential gear (31).

8. Machine according to claims 1 and 6, **characterised in that** the differential gear (31) is made up of a double crown gear (32) rotatably held by the shaft (14) and engaging on one side with the first rotor (4) and on the other side with satellites (33 and 34) engaging with a crown gear (35) force fitted to the shaft (14) to which the second rotor (20) is rigidly connected, the satellites (33 and 34) being rotatably held by a carrier (37) rotatable around the shaft (14) and rigidly holding an output shaft (38) .

9. Machine according to claim 1, whose respective motions of the rotors are also used separately.

10. Machine according to claims 1, 6 and 7, **characterised in that** it can be reversible and therefore can be used to create a thrust in the fluid in which it operates.

11. Machine as claimed in any of the preceding claims **characterised in that** it can as a whole also work with opposed rotor bodies still maintaining the assembly of the coaxial and concentric blades.

12. Machine as claimed in any of the preceding claims **characterised in that** it can as a whole also work intubated or with a conveyed flow.

## Revendications

1. Turbomachine comportant des roues à aubes, comprenant un carter (2), un rotor (4) monté tournant dans le carter (1), au moins deux aubes (5) montées à rotation, uniformément réparties sur une circonférence du rotor (4), et supportées sur un axe parallèle à l'axe du rotor, des moyens de transmission (7, 8, 9, 10) entre chaque axe de l'aube (4) et un manchon (12) pouvant tourner sur l'arbre (14) du rotor, **caractérisée en ce qu'**au premier rotor (4) est associé un deuxième rotor (20), qui est logé tournant par le premier rotor (4), le deuxième rotor (20) comprenant au moins deux aubes (22), montées à rotation, uniformément réparties sur une circonférence du rotor (20), et supportées sur un axe parallèle à l'axe du rotor, des moyens de transmission (24, 25, 26, 27, 28) entre chaque axe des aubes (22) et le manchon (12) qui peut tourner sur l'arbre (14) du rotor.

2. Turbomachine selon la revendication 1, **caractérisée en ce que** les moyens de transmission sont constitués d'une roue conique (24), solidarisée à l'axe de chaque aube, d'une roue conique (25) engagée avec celle-ci, d'une tige permettant à celle-ci d'être supportée à rotation par le rotor (20), d'une roue conique (27) solidarisé par la tige et d'une roue conique (28) bloquée par le manchon (12).

3. Turbomachine selon la revendication 1, **caractérisée en ce que** le manchon (12) est réglable à rotation autour de son axe.

4. Turbomachine selon la revendication 1, **caractérisée en ce que** le manchon (12) est en liaison cinématique avec une roue (29) maintenue à rotation par le corps et réglable par un gouvernail, de façon manuelle ou par un autre dispositif d'actionnement.

5. Turbo machine selon la revendication 1, **caractérisée en ce que** le premier rotor (4) comporte une roue dentée (15) engagée avec un premier pignon (16) maintenu à rotation par le corps (1) sur un axe perpendiculaire à l'axe de l'arbre (14) et avec un deuxième pignon (17) engagé à son tour avec une roue dentée (19) appliquée sur l'arbre (14).

6. Turbomachine selon la revendication 5, **caractérisée en ce que** le deuxième rotor (20) est appliquées sur le même arbre que le premier rotor (4).

7. Turbomachine selon la revendication 1, **caractérisée en ce que** le premier (4) et le deuxième rotor (20) sont en liaison cinématique avec un arbre de sortie (38) au moyen d'un engrenage différentiel (31).

8. Turbomachine selon les revendications 1 et 6, **caractérisée en ce que** l'engrenage différentiel (31) est constitué d'une double roue dentée (32) maintenue à rotation par l'arbre (14) et s'engageant sur un côté avec le premier rotor (4) et sur l'autre côté avec des satellites (33 et 34), à leur tour engagés avec une roue dentée (35) appliquées sur l'arbre (14), avec lequel est solidarisé le deuxième rotor (20), les satellites (33 et 34) étant maintenus à rotation par un support (37) qui tourne autour d'arbre (14) et solidarise un arbre de sortie (38).

9. Turbomachine selon la revendication 1, dont les mouvements respectifs des rotors sont utilisés aussi séparément.

10. Turbomachine selon les revendications 1, 6 et 7 **caractérisées en ce qu'**elle peut être réversible et peut donc être utilisée pour créer une poussée dans le fluide dans lequel elle se trouve à opérer.

11. Turbomachine selon l'une des revendications précédentes **caractérisée en ce qu'**elle peut opérer également dans son ensemble avec des corps de rotors opposés tout en maintenant l'ensemble des aubes coaxiales et concentriques.

12. Turbomachine selon l'une des revendications précédentes **caractérisée en ce qu'**elle peut opérer également dans son ensemble de façon encapsulée ou à écoulement dirigé.
